# EUROPÄISCHE PATENTSCHRIFT

(11) **EP 3 234 733 B1**
(45) Veröffentlichungstag und Bekanntmachung des Hinweises auf die Patenterteilung: **10.10.2018**
(21) Anmeldenummer: 15802010.7
(22) Anmeldetag: 20.11.2015
(51) Int. Cl.: G06F 3/01, G06F 3/03, B60K 37/06

(54) **VERFAHREN ZUR STEUERUNG EINES FAHRZEUGSYSTEMS**
METHOD FOR CONTROLLING A VEHICLE SYSTEM
PROCÉDÉ DE COMMANDE D'UN SYSTÈME D'UN VÉHICULE

(30) Priorität: 15.12.2014 DE 102014225796
(43) Veröffentlichungstag der Anmeldung: 25.10.2017
(73) Patentinhaber: Bayerische Motoren Werke Aktiengesellschaft, 80809 München (DE)
(72) Erfinder: MENATH, Andreas, 80807 München (DE)
(86) Internationale Anmeldenummer: PCT/EP2015/077178
(87) Internationale Veröffentlichungsnummer: WO 2016/096321

(56) Entgegenhaltungen:
- WO-A1-2013/075005
- US-A1- 2010 251 188
- XAVIER J ET AL: "Fast Line, Arc/Circle and Leg Detection from Laser Scan Data in a Player Driver", ROBOTICS AND AUTOMATION, 2005. PROCEEDINGS OF THE 2005 IEEE INTERNATIONAL CONFERENCE ON BARCELONA, SPAIN 18-22 APRIL 2005, PISCATAWAY, NJ, USA,IEEE, 18. April 2005 (2005-04-18), Seiten 3930-3935, XP010871534, DOI: 10.1109/ROBOT.2005.1570721 ISBN: 978-0-7803-8914-4

## Beschreibung

Die vorliegende Erfindung betrifft ein Verfahren zur Steuerung eines Fahrzeugsystems, ein Analysemodul sowie ein Fahrzeug.

Zur Steuerung von Fahrzeugsystemen durch den Benutzer eines Fahrzeugs wird traditionell auf Schalter zurückgegriffen, welche dem Benutzer eine unmittelbare haptische Rückmeldung zur vorgenommenen Bedienaktion bieten. Über die Jahre hat die Anzahl der zu bedienenden Fahrzeugsysteme (Licht, Musikanlagen, Navigationssysteme, Telefonanlagen, Geschwindigkeitsregelsysteme, Abstandsregelsysteme, Spurhalteassistenten, etc.) immer weiter zugenommen, so dass es sich als nicht praktikabel erwiesen hat, jedes Fahrzeugsystem mit einem eigenen Schalter anzusteuern. Es werden daher mittlerweile überwiegend Dreh-Drück-Schalter verwendet, die in Kombination mit einer vorgegebenen Menüstruktur die Steuerung der Fahrzeugsysteme ermöglichen. Ebenso ist es bekannt die Fahrzeugsysteme über Spracheingaben anzusteuern. Die begrenzte Anzahl der Eingabemöglichkeiten mit einem Dreh-Drück-Schalter kann dabei sehr komplexe Menüstrukturen bedingen. Auf der anderen Seite können Umgebungsgeräusche, beispielsweise bei einem durch einen Tunnel fahrenden Cabrio, die sichere Identifikation von Spracheingaben erschweren.

In der US 2010/251188 A1 wird ein Verfahren zum Bestimmen eines Eingabemusters beschrieben, welches angepasst ist, um auf einem elektronischen Gerät implementiert zu werden, das mit einem Berührungsbedienfeld ausgestattet ist und die folgenden Schritte umfasst: Erfassen einer Mehrzahl von Grenzpunkten zwischen einem über das Berührungsfeld eingegebenen Eingabemuster und einem umschriebenen Polygon des Eingabemusters, Detektieren eines Flächenverhältnisses eines Polygons, das durch die Grenzpunkte zu dem umschriebenen Polygon definiert ist, und Bestimmen der Form des Eingangsmusters mindestens entsprechend dem Flächenverhältnis.

Im Artikel Xavier et Al.: "Fast Line, Arc/Circle and Leg Detection from Laser Scan Data in a Player Driver", DOI: 10.1109/ROBOT.2005.1570721 wird ein Feature-Erkennungssystem zur Echtzeiterkennung von Linien, Kreisen und Personenbeinen aus Laserentfernungsdaten vorgeschlagen.

In der WO 2013/075005 A1 werden Methoden und Systeme für ein komplettes Fahrzeugökosystem bereitgestellt. Insbesondere Systeme, die, wenn sie alleine oder zusammen genommen werden, einer Person oder einer Gruppe von Individuen eine intuitive und komfortable Fahrzeugumgebung bereitstellen. Vorgeschlagen wird ein universelles Chassis, das in der Kopfeinheit eines Fahrzeugs montiert werden kann. Das Gehäuse kann ein oder mehrere Module aufnehmen, die jeweils gemeinsame Abmessungen haben. Mit einem gemeinsamen Formfaktor ist das universelle Gehäuse konfigurierbar, da verschiedene Module mit unterschiedlichen Funktionen leicht in das Gehäuse eingefügt werden können.

Hiervon ausgehend lag der vorliegenden Erfindung die Aufgabe zugrunde, ein alternatives Verfahren zur Steuerung eines Fahrzeugsystems, ein Analysemodul sowie ein Fahrzeug anzugeben, welches die Nachteile der bekannten Verfahren vermeidet.

Diese Aufgabe wird gelöst durch das Verfahren gemäß Hauptanspruch 1 und die Gegenstände der nebengeordneten Patentansprüche 15 und 16. Vorteilhafte Ausgestaltungen des Verfahrens sind in den auf Patentanspruch 1 rückbezogenen Patentansprüchen 2 bis 14 angegeben.

Ein Verfahren zur Steuerung eines Fahrzeugsystems durch einen Benutzer, wobei eine Folge von Sensordaten eines Sensorsystems empfangen wird, wobei, indem aus jedem Element der Folge von Sensordaten die Position eines Körperteils bestimmt wird, eine Folge von Positionen generiert wird, wobei aus der Folge von Positionen eine erste Position, eine zeitlich der ersten Position nachfolgende zweite Position und eine zeitlich der zweiten Position nachfolgende dritte Position gewählt wird, wobei ein erster Winkel definiert durch die erste Position, die zweite Position und die dritte Position bestimmt wird, wobei eine erste Kreisrichtung im Uhrzeigersinn erkannt wird, wenn der erste Winkel zwischen einem ersten unteren Schwellwert v und einem ersten oberen Schwellwert π - w liegt, wobei eine erste Kreisrichtung entgegen des Uhrzeigersinns erkannt wird, wenn der erste Winkel zwischen einem zweiten unteren Schwellwert π + v und einem zweiten oberen Schwellwert 2 π - w, und wobei in Abhängigkeit der ersten erkannten Kreisrichtung das Fahrzeugsystem gesteuert wird, kann eine besonders intuitive Bedienung des Fahrzeugsystems ermöglichen.

Die Sensordaten können insbesondere von einem Sensorsystem in Form einer Kamera zur Verfügung gestellt werden. Bei der Kamera kann es sich beispielsweise, um eine monochrome Kamera handeln, die im Bereich des sichtbaren Lichts empfindlich ist. Eine monochrome Kamera kann eine höhere Auflösung der Sensordaten, insbesondere eine höhere Auflösung der Bilddaten, ermöglichen. Weiter kann sich eine monochrome Kamera durch ein sehr geringes Rauschen auszeichnen. Die Verwendung einer Farbkamera kann sich bei der Bestimmung der Position eines Körperteils als nützlich erweisen. Beispielsweise können sich Hautfarbtöne gut vom Hintergrund abheben und eine einfachere Bestimmung der Position eines Körperteils ermöglichen. Es ist ebenfalls denkbar, dass eine Infrarotkamera verwendet wird. Eine Infrarotkamera kann sich insbesondere bei schlechten Lichtverhältnissen als günstig erweisen. Ebenso kann es eine Infrarotkamera ermöglichen, die Position des Körperteils anhand der abgestrahlten Wärme zu ermitteln. Bei der Kamera kann es sich um eine 2D-Kamera handeln, mit der ein zweidimensionales Abbild der Umgebung und mithin eine zweidimensionale Bestimmung der Position des Körperteils gewonnen werden kann. Ebenso kann im Rahmen des Verfahrens als Sensorsystem auch eine 3D-Kamera zum Einsatz gelangen und die Position des Körperteils in drei Dimensionen bestimmt werden. Auf diese Weise können auch Winkel erkannt werden, die in einer Ebene parallel zur Kameraachse liegen.

Die Sensordaten können regelmäßig, insbesondere periodisch empfangen werden. Das Abfragen bzw. Empfangen der Sensordaten mindestens alle 20 ms kann eine besonders robuste Erkennung der Kreisgeste ermöglichen. Eine besonders präzise Steuerung des Fahrzeugsystems kann ermöglicht werden, wenn die Sensordaten mindestens alle 12 ms abgefragt werden. Bei einer Limitierung des zeitlichen Abstands zwischen dem Empfang der Sensordaten auf mehr als 5 ms kann das Rauschen der Sensordaten auf einfache Weise mittels eines Tiefpassfilters reduziert werden.

Im Rahmen des Verfahrens lassen sich grundsätzlich die Bewegungen verschiedene Körperteile zur Steuerung des Fahrzeugsystems verwenden. Als besonders intuitiv hat es sich jedoch erwiesen, die Position eines Fingers, insbesondere des Daumens oder des Zeigefingers, zu verwenden. Die Position eines Fingers lässt sich insbesondere mit Sensorsystemen besonders einfach bestimmen. Die Verwendung der Position des Handgelenks zur Steuerung des Fahrzeugsystems kann durch die gegenüber einem Finger typischerweise ruhigeren Positionswechsel die Bewegungsanalyse vereinfachen. Grundsätzlich ist es ebenfalls denkbar, dass anstelle der Position eines Körperteils auch die Position eines vom Benutzer gehaltenen Gegenstandes bestimmt wird.

Bei der ersten Position, der zweiten Position und der dritten Position muss es sich nicht um zeitlich unmittelbar aufeinanderfolgende Positionen in der Folge von Positionen handeln. Beispielsweise kann als erste Position die Position zum Zeitpunkt t_n, als zweite Position die Position zum Zeitpunkt t_(n+k) und als dritte Position die Position zum Zeitpunkt t_(n+k+l) verwendet werden.

Bei einer nicht mit der notwendigen Zuverlässigkeit erkannten Kreisrichtung, d.h. in dem Fall, dass weder eine Kreisrichtung im Uhrzeigersinn noch eine Kreisrichtung entgegen des Uhrzeigersinns erkannt worden ist, kann eine eventuelle Fehlbedienung des Fahrzeugsystems vermieden werden.

Die vorgewählten Werte v und w können beispielsweise zwischen π / 40 und π / 20 liegen. Dabei können die Werte v und w insbesondere auch identisch sein, so dass aufgrund der symmetrischen Randbedingungen die Berechnung vereinfacht werden kann.

In einer Ausgestaltung des Verfahrens zur Steuerung eines Fahrzeugsystems wird die zweite Position in Abhängigkeit des zeitlichen Abstandes von der ersten Position gewählt und die dritte Position in Abhängigkeit des zeitlichen Abstandes von der zweiten Position gewählt. Insbesondere im Fall einer periodischen Ermittlung der Positionen kann die Auswahl der ersten Position, der zweiten Position und der dritten Position im Voraus geschehen, so dass das erfindungsgemäße Verfahren mit geringem Aufwand technisch umgesetzt werden kann. Die zeitlichen Abstände zwischen der ersten Position und der zweiten Position auf der einen Seite und der zweiten Position und der dritten Position auf der anderen Seite können insbesondere gleich gewählt werden.

Eine Weiterbildung des Verfahrens zur Steuerung eines Fahrzeugsystems sieht vor, dass die zweite Position in Abhängigkeit des räumlichen Abstandes von der ersten Position gewählt wird, und dass die dritte Position in Abhängigkeit des räumlichen Abstandes von der zweiten Position gewählt wird.

Ein räumlicher Abstand zwischen der ersten Position und der zweiten Position bzw. zwischen der zweiten Position und der dritten Position oberhalb eines gewissen Grenzwertes kann die Zuverlässigkeit bei der Erkennung einer Kreisbewegung erhöhen. Ein räumlicher Abstand von mehr als 1 cm, insbesondere mehr als 3 cm hat sich als besonders zuverlässig erwiesen. Um auch kleinere Kreisbewegungen eines Benutzers noch erfassen zu können, kann es sich als sinnvoll erweisen den räumlichen Abstand zwischen der ersten Position und der zweiten Position bzw. zwischen der zweiten Position und der dritten Position geringer als 10 cm zu halten.

Ferner wird nach einem Ausführungsbeispiel des Verfahrens zur Steuerung eines Fahrzeugsystems basierend auf der ersten Position, der zweiten Position und der dritten Position ein erster Kreis umfassend einen ersten Kreismittelpunkt und/oder einen ersten Kreisradius und/oder eine erste Kreisebene bestimmt.

Die erste Position, die zweite Position und die dritte Position können als Positionen auf dem Umkreis des ersten Kreise aufgefasst werden und die Bestimmung der Lage und der Größe des Kreises im zweidimensionalen bzw. dreidimensionalen Raum ermöglich. Die Parameter des Kreises können zur individuellen Steuerung des Fahrzeugsystems genutzt werden.

Beispielsweise sieht eine Ausgestaltung des Verfahrens zur Steuerung eines Fahrzeugsystems vor, dass das Fahrzeugsystem in Abhängigkeit des ersten Kreisradius gesteuert wird. Es ist denkbar, dass mit einem ersten Kreis, d.h. einer ersten Kreisgeste, deren erster Kreisradius größer als 10 cm ist, die Lautstärke einer Musikanlage gesteuert wird. Ein anderer erster Kreis, deren erster Kreisradius kleiner als 8 cm ist, kann ein Durchblättern der einzelnen Titel eines Musikalbums ermöglichen. Nicht alle durch den Benutzer eines Fahrzeuges vorgenommenen Bewegungen mögen dazu gedacht sein, eine Steuerung eines Fahrzeugsystems zu bewirken. Beispielsweise mag der Fahrer des Fahrzeuges mit seiner rechten Hand eine Viertelkreisgeste beschreiben, um nach einer im Handschuhfach oder in der Mittelkonsole befindliche Sonnenbrille zu greifen. Es kann sich daher als sinnvoll erweisen, eine Steuerung des Fahrzeugsystems nur dann vorzunehmen, wenn der erste Kreisradius zwischen 1 cm und 40 cm liegt. Typischerweise kann bei einem ersten Kreisradius von mehr als 5 cm von einer gewollten Kreisgeste ausgegangen werden. Wenn der Kreisradius weniger als 20 cm beträgt, kann der vom Sensorsystem zu erfassende Raum in einer vertretbaren Größe gehalten werden.

Ferner wird in einer Weiterbildung des Verfahrens zur Steuerung eines Fahrzeugsystems das Fahrzeugsystem gesteuert, wenn der erste Kreismittelpunkt innerhalb eines vorgegebenen Aktivierungsquadrats bzw. eines vorgegebenen Aktivierungswürfels liegt. Wie voranstehend ausgeführt, ist nicht jede vom Benutzer eines Fahrzeugs ausgeführte kreisähnliche Bewegung zur Steuerung eines Fahrzeugsystems gedacht. Durch die Vorgabe eines Aktivierungsquadrats bzw. eines Aktivierungsquadrats mit einer Kantenlänge von 5 cm bis 15 cm, insbesondere 10 cm, kann die Gefahr einer unabsichtlichen Bedienung des Fahrzeugsystems verringert werden. Es ist auch möglich, mehrere, räumlich voneinander getrennte Aktivierungsquadrate bzw. Aktivierungsquader vorzusehen, die zur Steuerung unterschiedlicher Fahrzeugsysteme oder unterschiedlicher Funktionen ein und desselben Fahrzeugsystems verwendet werden können.

Darüber hinaus wird gemäß einem Ausführungsbeispiel des Verfahrens zur Steuerung eines Fahrzeugsystems das Fahrzeugsystem in Abhängigkeit der Ausrichtung der ersten Kreisebene zu einer vorgegebenen Ebene gesteuert. Die Ausrichtung der Kreisebene kann einen weiteren Freiheitsgrad zur Bedienung des Fahrzeugsystems bieten. Im Fall der Bedienung einer Musikanlage kann beispielsweise eine erste Kreisebene, deren Flächennormale parallel zur Fahrzeuglängsachse ausgerichtet ist, ein Durchblättern der einzelnen Musikstücke eines Musikalbums ermöglichen. Eine erste Kreisebene, deren Flächennormale parallel zur Fahrzeugquerachse verläuft, kann davon abweichend die Auswahl eines bestimmten Musikalbums ermöglichen.

Weiter sieht eine Ausgestaltung des Verfahrens zur Steuerung eines Fahrzeugsystems vor, dass das Fahrzeugsystem in Abhängigkeit eines ersten Kreissektorwinkels gesteuert wird, welcher durch die erste Position, den ersten Kreismittelpunkt und die dritte Position definiert wird. Die Vorgabe eines ersten Kreissektorwinkels oberhalb einer vorbestimmten Schwelle kann die Sicherheit, dass eine gewollte Geste des Benutzers vorliegt, erhöhen. Der Kreissektorwinkel kann weiter als Parameter für die Steuerung des Fahrzeugsystems verwendet werden, beispielsweise kann bei einem kleinen Kreissektorwinkel die Karte eines Navigationssystems in einem geringeren Umfang vergrößert werden als bei einem größeren Kreissektorwinkel.

Ferner wird nach einer Weiterbildung des Verfahrens zur Steuerung eines Fahrzeugsystems das Fahrzeugsystem in Abhängigkeit einer ersten mittleren Kreissektorwinkelgeschwindigkeit zwischen der ersten Position und der dritten Position gesteuert. Auf diese Weise kann ein weiterer Parameter zur Steuerung des Fahrzeugsystems erhalten werden. Eine eher hohe erste mittlere Kreissektorwinkelgeschwindigkeit, beispielsweise über 2 π pro Sekunde (2 π / s), kann ein Durchblättern von Musiktiteln in Abstände von 10 Musiktiteln ermöglichen. Weiter kann eine eher geringe Kreissektorgeschwindigkeit, beispielsweise unter 0,5 π/s ein Durchblättern der einzelnen Musiktitel ermöglichen.

Darüber hinaus sieht ein Ausführungsbeispiel des Verfahrens zur Steuerung eines Fahrzeugsystems vor, dass das Fahrzeugsystem in Abhängigkeit der Länge eines ersten Kreisumfangsabschnittes zwischen der ersten Position und der dritten Position gesteuert wird. Es hat sich herausgestellt, dass die Länge des ersten Kreisumfangsabschnittes zwischen der ersten Position und der dritten Position von einem Benutzer häufig als natürliches Maß für die Vornahme einer Änderung eines Parameters eines Fahrzeugsystems empfunden wird. Somit kann das genannte Ausführungsbeispiel eine besonders intuitive Bedienung des Fahrzeugsystems ermöglichen.

Weiter wird gemäß einer Ausgestaltung des Verfahrens zur Steuerung eines Fahrzeugsystems das Fahrzeugsystem in Abhängigkeit einer ersten mittleren Kreisumfangsgeschwindigkeit zwischen der ersten Position und der dritten Position gesteuert. Viele Benutzer empfinden die erste mittlere Kreisumfangsgeschwindigkeit, auf welche zusätzlich zur ersten Kreissektorgeschwindigkeit auch der erste Kreisradius einen Einfluss hat, als natürlichere Vorgabe, mit welcher Geschwindigkeit ein Parameter eines Fahrzeugsystems geändert werden soll. Diese Ausgestaltung kann somit eine besonders schnelle Adaption an das Verfahren zur Steuerung eines Fahrzeugsystems ermöglichen.

Ferner sieht eine Weiterbildung des Verfahrens zur Steuerung eines Fahrzeugsystems vor, dass aus der Folge von Positionen eine zeitlich der ersten Position nachfolgende vierte Position, eine zeitlich der vierten Position nachfolgende fünfte Position und eine zeitlich der fünften Position nachfolgende sechste Position gewählt wird, wobei ein zweiter Winkel definiert durch die vierte Position, die fünfte Position und die sechste Position bestimmt wird, wobei eine zweite Kreisrichtung im Uhrzeigersinn erkannt wird, wenn der zweite Winkel zwischen einem unteren Schwellwert a und einem oberen Schwellwert π - b liegt, wobei eine zweite Kreisrichtung entgegen des Uhrzeigersinns erkannt wird, wenn der zweite Winkel zwischen einem unteren Schwellwert π + a und einem oberen Schwellwert 2 π - b liegt, und wobei das Fahrzeugsystem in Abhängigkeit der Übereinstimmung von erster Kreisrichtung und zweiter Kreisrichtung gesteuert wird. Die Betrachtung eines weiteren Positionstripletts kann die Robustheit bei der Erkennung der Kreisgeste verbessern und somit die Gefahr von Fehlbedienungen reduzieren. Gleichwohl hier und im folgenden nur ein weiteres Positionstriplett (vierte Position, fünfte Position und sechste Position) beschrieben ist, ist es denkbar noch weitere Positionstriplett, ggf. sogar kontinuierlich, zu verwenden, um die erhaltenen Steuereingaben laufend auf Plausibilität zu überprüfen.

Darüber hinaus wird gemäß eines Ausführungsbeispiels des Verfahrens zur Steuerung eines Fahrzeugsystems basierend auf der vierten Position, der fünften Position und der sechsten Position ein zweiter Kreis umfassend einen zweiten Kreismittelpunkt und/oder einen zweiten Kreisradius und/oder eine zweite Kreisebene, bestimmt wird, wobei das Fahrzeugsystem in Abhängigkeit des Abstandes des zweiten Kreismittelpunktes vom ersten Kreismittelpunkt und/oder des Unterschiedes zwischen dem zweiten Kreisradius und dem ersten Kreisradius und/oder der Abweichung der zweiten Kreisebene von der ersten Kreisebene gesteuert wird.

Das Fahrzeugsystem kann beispielsweise nur dann gesteuert bzw. angesteuert werden, wenn der Abstand zwischen dem zweiten Kreismittelpunkt und dem ersten Kreismittelpunkt geringer ist als ein vorbestimmter Kreismittelpunktabstand, insbesondere 10 cm ist.

Weiter sieht eine Ausgestaltung des Verfahrens zur Steuerung eines Fahrzeugsystems vor, dass basierend auf den Sensordaten zur ersten Position und/oder zur zweiten Position und/oder zur dritten Position eine Pose ermittelt wird, und dass das Fahrerassistenzsystem in Abhängigkeit der erkannten Pose gesteuert wird. Unter einer Pose kann beispielsweise das Ausstrecken einer bestimmten Anzahl von Fingern oder von bestimmten Fingern verstanden werden. Es ist denkbar, dass beispielsweise eine Änderung der Lautstärke nur vorgenommen wird, wenn erkannt wird, dass der Benutzer den Zeigefinger ausstreckt. Posen werden von einem Benutzer typischerweise nicht zufällig gemacht und können daher ein guter Indikator dafür sein, ob eine Ansteuerung des Fahrzeugsystems gewünscht ist oder nicht.

Ein Analysemodul, welches dazu eingerichtet ist, ein oben beschriebenes Verfahren zur Steuerung eines Fahrzeugsystems durchzuführen, kann eine intuitive Bedienung eines Fahrzeugsystems ermöglichen.

Ein Fahrzeug, welches ein Sensorsystem und ein voranbeschriebenes Analysemodul aufweist, kann aufgrund reduzierter Ablenkungsgefahr durch komplizierte Bedienung eines Fahrzeugsystems die Verkehrssicherheit erhöhen.

Nachfolgend werden weitere Ausführungsbeispiele der Erfindung erläutert. In der Zeichnung zeigt beispielhaft:
- Figur 1: eine Fahrzeugcockpit;
- Figur 2: eine Kreisgestenskizze;
- Figur 3: ein Ablaufdiagramm

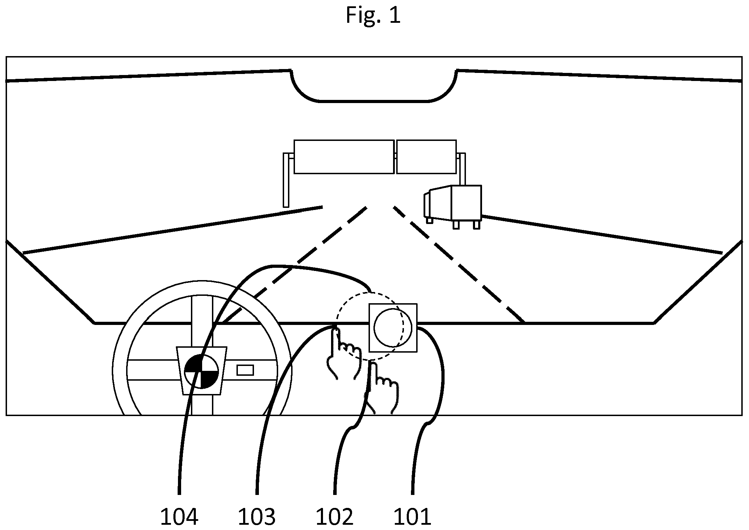

In der in der Figur 1 ist das Cockpit eines Fahrzeugs dargestellt. Der Benutzer des Fahrzeugs, hier der Fahrer, bewegt seinen Zeigefinger in Form eines Kreises 104 vor einem Sensorsystem 101 in der Mittelkonsole. Zu einem ersten Zeitpunkt befindet sich die Spitze des Zeigefingers beispielsweise an der Position 102 und zu einem zweiten Zeitpunkt an der Position 103. Bei dem Sensorsystem 101 kann es sich um eine 3D-Kamera handeln, welche die Bewegung erfasst. Im vorliegenden Fall macht der Benutzer des Fahrzeugs eine Pose in Form eines ausgestreckten Zeigefingers und eingeklappten Daumens. Die mittels des Sensorsystems 101 erkannte Kreisgeste und Pose kann dazu verwendet werden, die Lautstärke der Musikanlage zu verändern.

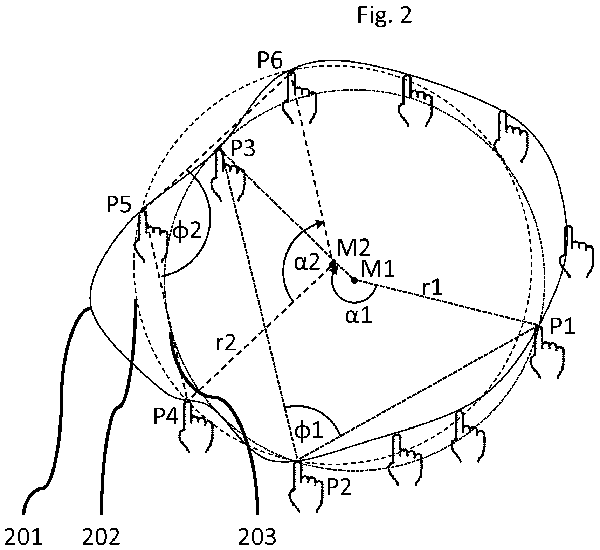

In der Figur 2 ist zur näheren Erläuterung des Verfahrens eine Skizze mit verschiedenen Positionen des Zeigefingers gezeigt. Das hier nur im Rahmen einer zweidimensionale Darstellung erläuterte Verfahren lässt sich entsprechend auch bei dreidimensionalen Positionen verwenden.

Der Benutzer des Fahrzeugs vollzieht mit seinem Zeigefinger typischerweise eine Bewegung 201 die nur annähernd die Form eines Kreises hat. Dabei nimmt der Finger nacheinander verschiedene Positionen im Raum ein, von denen, um die Zeichnung nicht zu überfrachten, nur die Positionen P1 bis P6 bezeichnet sind. Die Bezeichnung der Positionen bezieht sich dabei nicht auf deren zeitliche Reihenfolge, insbesondere liegen zwischen den Positionen P1 und P2 zwei weitere Positionen und die Position P5 wird vor der Position P3 eingenommen.

Mithilfe der Positionen P1 bis P3 und P4 bis P6 wird jeweils ein erster Winkel ϕ1 und ein zweiter Winkel ϕ2 bestimmt. Für jeden der Winkel ϕ1 und ϕ2 wird ermittelt, ob der Winkel innerhalb vorgegebener Bereiche liegt und dementsprechend eine Kreisrichtung im Uhrzeigersinn oder gegen den Uhrzeigersinn vorliegt. Nur wenn die Kreisrichtung übereinstimmt wird ein Parameter des Fahrzeugsystems gehändert.

Auf der Grundlage der Positionen P1 bis P6 können ein erster Kreis 203 und ein zweiter Kreis 202 bestimmt werden, die durch einen ersten Mittelpunkt M1 bzw. einen zweiten Mittelpunkt M2 und einen ersten Radius r1 bzw. einen zweiten Radius r2 gekennzeichnet sind. Wie aus der Figur 1 ersichtlich können die Mittelpunkte M1 und M2 aufgrund der eher kartoffelähnlichen Trajektorie 201 des Zeigefingers des Benutzers einen gewissen Abstand voneinander. Aus den gleichen Gründen sind der erste Radius r1 und der zweite Radius r2 nicht notwendig identisch. Das Verfahren zur Steuerung eines Fahrzeugsystems kann vorsehen, dass gleichwohl nur gewisse Abweichungen erlaubt sind, um noch von einer Kreisgeste ausgehen zu können. Der erste Kreissektorwinkel α1 und der zweite Kreissektorwinkel α2 können genutzt werden, um herauszufinden, um welchen Wert ein Parameter des Fahrzeugsystems geändert werden soll.

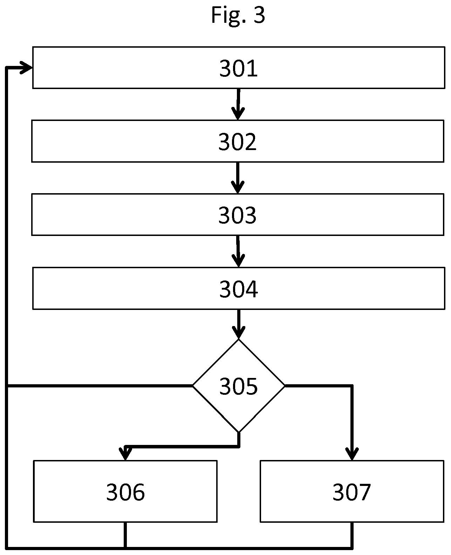

Figur 3 zeigt ein beispielhaftes Ablaufdiagramm des Verfahrens zur Steuerung eines Fahrzeugsystems. In einem Schritt 301 wird eine Folge von Sensordaten eines Sensorsystems empfangen. Aus jedem Element der Folge von Sensordaten wird in einem Schritt 302 die Position eines Körperteils bestimmt und somit eine Folge von Positionen generiert. Im Schritt 303 wird aus der Folge von Positionen eine erste Position, eine zeitlich der ersten Position nachfolgende zweite Position und eine zeitlich der zweiten Position nachfolgende dritte Position gewählt. Ein erster Winkel, definiert durch die erste Position, die zweite Position und die dritte Position, wird im Schritt 304 bestimmt. Im Schritt 305 wird eine erste Kreisrichtung im Uhrzeigersinn erkannt, wenn der erste Winkel (ϕ1) zwischen einem ersten unteren Schwellwert v und einem ersten oberen Schwellwert π - w liegt, und eine erste Kreisrichtung entgegen des Uhrzeigersinns erkannt, wenn der erste Winkel (ϕ1) zwischen einem zweiten unteren Schwellwert π + v und einem zweiten oberen Schwellwert 2 π - w liegt. In Abhängigkeit der ersten erkannten Kreisrichtung wird das Fahrzeugsystem entweder entsprechend dem Schritt 306 oder dem Schritt 307 gesteuert.

Zusammenfassend ermöglicht die Erfindung eine robuste Erkennung einer Kreisgeste.

## Patentansprüche

1. Verfahren zur Steuerung eines Fahrzeugsystems durch einen Benutzer,
wobei von einem Analysemodul eine Folge von Sensordaten eines Sensorsystems (101) empfangen wird,
wobei mittels des Analysemoduls, indem aus jedem Element der Folge von Sensordaten die Position eines Körperteils des Benutzers bestimmt wird, eine Folge von Positionen generiert wird,
wobei mittels des Analysemoduls aus der Folge von Positionen eine erste Position, P1, eine zeitlich der ersten Position (P1) nachfolgende zweite Position, P2, und eine zeitlich der zweiten Position (P2) nachfolgende dritte Position, P3 gewählt wird,
wobei ein erster Winkel ∠P1P2P3 (ϕ1), definiert durch die erste Position (P1), die zweite Position (P2) und die dritte Position (P3), bestimmt wird,
**dadurch gekennzeichnet,**
**dass** eine erste Kreisrichtung im Uhrzeigersinn erkannt wird, wenn der erste Winkel (ϕ1) zwischen einem ersten unteren Schwellwert v und einem ersten oberen Schwellwert π - w liegt,
**dass** eine erste Kreisrichtung entgegen des Uhrzeigersinns erkannt wird, wenn der erste Winkel (ϕ1) zwischen einem zweiten unteren Schwellwert π + v und einem zweiten oberen Schwellwert 2 π - w liegt, und
**dass** in Abhängigkeit der ersten erkannten Kreisrichtung das Fahrzeugsystem gesteuert wird.

2. Verfahren zur Steuerung eines Fahrzeugsystems nach Anspruch 1,
wobei die zweite Position (P2) in Abhängigkeit des zeitlichen Abstandes von der ersten Position (P1) gewählt wird, und
wobei die dritte Position (P3) in Abhängigkeit des zeitlichen Abstandes von der zweiten Position (P2) gewählt wird.

3. Verfahren zur Steuerung eines Fahrzeugsystems nach einem der Ansprüche 1 oder 2,
wobei die zweite Position (P2) in Abhängigkeit des räumlichen Abstandes von der ersten Position (P1) gewählt wird, und
wobei die dritte Position (P3) in Abhängigkeit des räumlichen Abstandes von der zweiten Position (P2) gewählt wird.

4. Verfahren zur Steuerung eines Fahrzeugsystems nach einem der Ansprüche 1 bis 3,
wobei basierend auf der ersten Position (P1), der zweiten Position (P2) und der dritten Position (P3) ein erster Kreis (203) umfassend
einen ersten Kreismittelpunkt (M1) und/oder
einen ersten Kreisradius (r1) und/oder
eine erste Kreisebene
bestimmt wird.

5. Verfahren zur Steuerung eines Fahrzeugsystems nach Anspruch 4,
wobei das Fahrzeugsystem in Abhängigkeit des ersten Kreisradius (r1) gesteuert wird.

6. Verfahren zur Steuerung eines Fahrzeugsystems nach einem der voranstehenden Ansprüche 4 oder 5,
wobei das Fahrzeugsystem gesteuert wird, wenn der erste Kreismittelpunkt (M1) innerhalb eines vorgegebenen Aktivierungsquadrats bzw. eines vorgegebenen Aktivierungswürfels liegt.

7. Verfahren zur Steuerung eines Fahrzeugsystems nach einem der voranstehenden Ansprüche 4 bis 6,
wobei das Fahrzeugsystem in Abhängigkeit der Ausrichtung der ersten Kreisebene zu einer vorgegebenen Ebene gesteuert.

8. Verfahren zur Steuerung eines Fahrzeugsystems nach einem der voranstehenden Ansprüche 4 bis 7,
wobei das Fahrzeugsystem in Abhängigkeit eines ersten Kreissektorwinkels (α1) gesteuert wird, welcher durch die erste Position (P1), den ersten Kreismittelpunkt (M1) und die dritte Position (P3) definiert wird.

9. Verfahren zur Steuerung eines Fahrzeugsystems nach einem der voranstehenden Ansprüche,
wobei das Fahrzeugsystem in Abhängigkeit einer ersten mittleren Kreissektorwinkelgeschwindigkeit zwischen der ersten Position (P1) und der dritten Position (P3) gesteuert wird.

10. Verfahren zur Steuerung eines Fahrzeugsystems nach einem der voranstehenden Ansprüche,
wobei das Fahrzeugsystem in Abhängigkeit der Länge eines ersten Kreisumfangsabschnittes zwischen der ersten Position (P1) und der dritten Position (P3) gesteuert wird.

11. Verfahren zur Steuerung eines Fahrzeugsystems nach einem der voranstehenden Ansprüche,
wobei das Fahrzeugsystem in Abhängigkeit einer ersten mittleren Kreisumfangsgeschwindigkeit zwischen der ersten Position (P1) und der dritten Position (P3) gesteuert wird.

12. Verfahren zur Steuerung eines Fahrzeugsystems nach einem der voranstehenden Ansprüche,
wobei aus der Folge von Positionen eine zeitlich der ersten Position (P1) nachfolgende vierte Position, P4, eine zeitlich der vierten Position (P4) nachfolgende fünfte Position, P5, und eine zeitlich der fünften Position (P5) nachfolgende sechste Position, P6, gewählt wird,
wobei ein zweiter Winkel ∠P4P5P6 (ϕ2), definiert durch die vierte Position (P4), die fünfte Position (P5) und die sechste Position (P6), bestimmt wird,
wobei eine zweite Kreisrichtung im Uhrzeigersinn erkannt wird, wenn der zweite Winkel zwischen einem unteren Schwellwert a und einem oberen Schwellwert π - b liegt,
wobei eine zweite Kreisrichtung entgegen des Uhrzeigersinns erkannt wird, wenn der zweite Winkel zwischen einem unteren Schwellwert π + a und einem oberen Schwellwert 2 π - b liegt, und
wobei das Fahrzeugsystem in Abhängigkeit der Übereinstimmung von erster Kreisrichtung und zweiter Kreisrichtung gesteuert wird.

13. Verfahren zur Steuerung eines Fahrzeugsystems nach Anspruch 12,
wobei basierend auf der vierten Position (P4), der fünften Position (P5) und der sechsten Position (P6) ein zweiter Kreis (202) umfassend
einen zweiten Kreismittelpunkt (M2) und/oder
einen zweiten Kreisradius (r2) und/oder
eine zweite Kreisebene, bestimmt wird,
wobei das Fahrzeugsystem in Abhängigkeit
des Abstandes des zweiten Kreismittelpunktes (M2) vom ersten Kreismittelpunkt (M1) und/oder
des Unterschiedes zwischen dem zweiten Kreisradius (r2) und dem ersten Kreisradius (r1) und/oder
der Abweichung der zweiten Kreisebene von der ersten Kreisebene gesteuert wird.

14. Analysemodul,
wobei das Analysemodul dazu eingerichtet ist, ein Verfahren gemäß einem der Ansprüche 1 bis 13 durchzuführen.

15. Fahrzeug, **dadurch gekennzeichnet, dass** das Fahrzeug ein Sensorsystem und ein Analysemodul nach Anspruch 14 aufweist.

## Claims

1. A method for controlling a vehicle system by a user,
wherein a sequence of sensor data of a sensor system (101) is received by an analysis module,
wherein, by means of the analysis module, a sequence of positions is generated in that the position of a body part of the user is determined from each element of the sequence of sensor data,
wherein, by means of the analysis module, a first position, P1, a second position, P2, chronologically after the first position (P1), and a third position, P3, chronologically after the second position (P2), is selected from the sequence of positions,
wherein a first angle d̅ P1P2P3 (j 1), defined by the first position (P1), the second position (P2), and the third position (P3), is determined,
**characterised in that**
a first circle direction in a clockwise direction is identified if the first angle (j 1) lies between a first lower threshold value v and a first upper threshold value p - w,
**in that** a first circle direction in an anticlockwise direction is identified if the first angle (j 1) lies between a second lower threshold value p + v and a second upper threshold value 2 p - w, and
**in that** the vehicle system is controlled depending on the first identified circle direction.

2. A method for controlling a vehicle system according to claim 1,
wherein the second position (P2) is selected depending on the time distance from the first position (P1), and
wherein the third position (P3) is selected depending on the time distance from the second position (P2).

3. A method for controlling a vehicle system according to either one of claims 1 or 2,
wherein the second position (P2) is selected depending on the physical distance from the first position (P1), and
wherein the third position (P3) is selected depending on the physical distance from the second position (P2).

4. A method for controlling a vehicle system according to any one of claims 1 to 3,
wherein, based on the first position (P1), the second position (P2), and the third position (P3), a first circle (203) comprising
a first circle centrepoint (M1) and/or
a first circle radius (r1) and/or
a first circle plane
is determined.

5. A method for controlling a vehicle system according to claim 4,
wherein the vehicle system is controlled depending on the first circle radius (r1).

6. A method for controlling a vehicle system according to any one of preceding claims 4 or 5,
wherein the vehicle system is controlled if the first circle centrepoint (M1) lies within a predefined activation square or a predefined activation cube.

7. A method for controlling a vehicle system according to any one of preceding claims 4 to 6,
wherein the vehicle system is controlled depending on the orientation of the first circle plane relative to a predefined plane.

8. A method for controlling a vehicle system according to any one of preceding claims 4 to 7,
wherein the vehicle system is controlled depending on a first circle segment angle (a1), which is defined by the first position (P1), the first circle centrepoint (M1), and the third position (P3).

9. A method for controlling a vehicle system according to any one of the preceding claims,
wherein the vehicle system is controlled depending on a first average circle segment angular speed between the first position (P1) and the third position (P3).

10. A method for controlling a vehicle system according to any one of the preceding claims,
wherein the vehicle system is controlled depending on the length of a first circle circumference portion between the first position (P1) and the third position (P3).

11. A method for controlling a vehicle system according to any one of the preceding claims,
wherein the vehicle system is controlled depending on a first average circle circumference speed between the first position (P1) and the third position (P3).

12. A method for controlling a vehicle system according to any one of the preceding claims,
wherein a fourth position, P4, chronologically after the first position (P1), a fifth position, P5, chronologically after the fourth position (P4), and a sixth position, P6, chronologically after the fifth position (P5) is selected from the sequence of positions,
wherein a second angle d̅ P4P5P6 (j 2), defined by the fourth position (P4), the fifth position (P5), and the sixth position (P6), is determined,
wherein a second circle direction in a clockwise direction is identified if the second angle lies between a lower threshold value a and an upper threshold value p - b,
wherein a second circle direction in an anticlockwise direction is identified if the second angle lies between a lower threshold value p + a and an upper threshold value 2 p - b, and
wherein the vehicle system is controlled depending on whether the first circle direction and second circle direction are consistent.

13. A method for controlling a vehicle system according to claim 12, wherein, based on the fourth position (P4), the fifth position (P5), and the sixth position (P6), a second circle (202) comprising
a second circle centrepoint (M2) and/or
a second circle radius (r2) and/or
a second circle plane, is determined,
wherein the vehicle system is controlled depending on
the distance of the second circle centrepoint (M2) from the first circle centrepoint (M1) and/or depending on
the difference between the second circle radius (r2) and the first circle radius (r1) and/or depending on
the deviation of the second circle plane from the first circle plane.

14. An analysis module,
wherein the analysis module is designed to carry out a method according to any one of claims 1 to 13.

15. A vehicle, **characterised in that** the vehicle comprises a sensor system and an analysis module according to claim 14.

## Revendications

1. Procédé d'une commande d'un système de véhicule par un utilisateur, selon lequel
un module d'analyse reçoit une succession de données d'un système de capteur (101),
un module d'analyse génère une succession de positions en déterminant la position d'une partie du corps de l'utilisateur à partir de chaque élément de la succession de données de capteur,
le module d'analyse sélectionne à partir de la succession de positions, une première position (P1), une seconde position (P2) suivant chronologiquement la première position (P1) et une troisième position (P3) suivant chronologiquement la seconde position (P2),
un premier angle <P1P2P3 (ϕ1), défini par la première position (P1) la seconde position (P2) et la troisième position (P3) est déterminé, **caractérisé en ce que**
une première direction de circulation dans le sens des aiguilles d'une montre est identifiée lorsque le premier angle (ϕ1) est situé entre une première valeur de seuil inférieure v et une première valeur de seuil supérieure π-w,
une seconde direction de circulation dans le sens contraire au sens des aiguilles d'une montre est identifiée lorsque le premier angle (ϕ1) est situé entre une seconde valeur de seuil inférieure n+v et une seconde valeur de seuil supérieure 2π-w, et
le système du véhicule est commandé en fonction de la première direction de circulation identifiée.

2. Procédé de commande d'un système de véhicule conforme à la revendication 1, selon lequel
la seconde position (P2) est choisie en fonction de sa distance chronologiquement par rapport à la première position (P1), et
la troisième position (P3) est choisie en fonction de sa distance chronologiquement par rapport à la seconde position (P2).

3. Procédé de commande d'un système de véhicule conforme à l'une des revendications 1 et 2, selon lequel
la seconde position (P2) est choisie en fonction de sa distance dans l'espace par rapport à la première position (P1), et
la troisième position (P3) est choisie en fonction de sa distance dans l'espace par rapport à la seconde position (P2).

4. Procédé de commande d'un système de véhicule conforme à l'une des revendications 1 à 3, selon lequel :
à partir de la première position (P1), de la seconde position (P2) et de la troisième position (P3), on détermine un premier cercle (203) ayant :
un premier centre (M1), et/ou
un premier rayon (r1), et/ou
un premier plan.

5. Procédé de commande d'un système de véhicule conforme à la revendication 4,
selon lequel le système du véhicule est commandé en fonction du premier rayon du cercle (r1).

6. Procédé de commande d'un système de véhicule conforme à l'une des revendications précédentes 4 ou 5,
selon lequel le système du véhicule est commandé lorsque le premier centre du cercle (M1) est situé dans un carré d'activation prédéfini ou dans un cube d'activation prédéfini.

7. Procédé de commande d'un système de véhicule conforme à l'une des revendications précédentes 4 à 6,
selon lequel le système du véhicule est commandé en fonction de l'orientation du premier plan du cercle par rapport à un plan prédéfini.

8. Procédé de commande d'un système de véhicule conforme à l'une des revendications précédentes 4 à 7,
selon lequel le système du véhicule est commandé en fonction d'un premier angle de secteur circulaire (α1) qui est défini par la première position (P1), le premier centre du cercle (M1) et la troisième position (P3).

9. Procédé de commande d'un système de véhicule conforme à l'une des revendications précédentes,
selon lequel le système du véhicule est commandé en fonction d'une première vitesse moyenne de l'angle du premier secteur circulaire entre la première position (P1) et la troisième position (P3).

10. Procédé de commande d'un système de véhicule conforme à l'une des revendications précédentes,
selon lequel le système du véhicule est commandé en fonction de la longueur du premier segment périphérique du cercle entre la première position (P1) et la troisième position (P3).

11. Procédé de commande d'un système de véhicule conforme à l'une des revendications précédentes,
selon lequel le système du véhicule est commandé en fonction d'une première vitesse périphérique moyenne entre la première position (P1) et la troisième position (P3).

12. Procédé de commande d'un système de véhicule conforme à l'une des revendications précédentes,
selon lequel à partir de la succession de positions on choisit une quatrième position (P4) suivant chronologiquement la première position (P1), une cinquième position (P5) suivant chronologiquement la quatrième position (P4) et une sixième position (P6) suivant chronologiquement la cinquième position (P5),
un second angle <P4P5P6 (ϕ2) défini par la quatrième position (P4), la cinquième position (P5) et la sixième position (P6) est déterminé,
une seconde direction de circulation dans le sens des aiguilles d'une montre est identifiée lorsque le second angle est situé entre une valeur de seuil inférieure a et une valeur de seuil supérieure π-b,
une seconde direction de circulation dans le sens contraire au sens des aiguilles d'une montre est identifiée lorsque le second angle est situé entre une valeur de seuil inférieure π + a et une valeur de seuil supérieure 2π -b, et
le système du véhicule est commandé en fonction de la concordance de la première direction de circulation et de la seconde direction de circulation.

13. Procédé de commande d'un système de véhicule conforme à la revendication 12,
selon lequel
à partir de la quatrième position (P4), de la cinquième position (P5) et de la sixième position (P6), on détermine un second cercle (202) ayant :
un second centre (M2), et/ou
un second rayon (r2), et/ou
un second plan, et
le système du véhicule est commandé en fonction,
de la distance entre le second centre (M2) et le premier centre de cercle (M1), et/ou
de la différence entre le second rayon (r2) et le premier rayon (r1), et/ou de l'écart entre le second plan et le premier plan.

14. Module d'analyse réalisé pour permettre la mise en oeuvre d'un procédé conforme à l'une des revendications 1 à 13.

15. Véhicule
**caractérisé en ce qu'**
il comporte un système de capteur et un module d'analyse conforme à la revendication 14.
